Europäisches Patentamt

European Patent Office

Office européen des brevets

(11) Veröffentlichungsnummer: **0 265 713**
**A2**

(12) **EUROPÄISCHE PATENTANMELDUNG**

(21) Anmeldenummer: 87114456.4

(22) Anmeldetag: 03.10.87

(51) Int. Cl.⁴: **B29C 49/58** , B29C 49/42

(30) Priorität: 28.10.86 DE 3636566

(43) Veröffentlichungstag der Anmeldung:
04.05.88 Patentblatt 88/18

(84) Benannte Vertragsstaaten:
FR GB IT

(71) Anmelder: **Fried. Krupp Gesellschaft mit beschränkter Haftung**
**Altendorfer Strasse 103**
**D-4300 Essen 1(DE)**

(72) Erfinder: **Kreuder, Gustav**
**Theodor-Suhnel-Strasse 26**
**D-4330 Mülheim 12(DE)**

(54) **Spannvorrichtung für Blasdorne von Blasformmaschinen.**

(57) Blasdorn-Spannvorrichtungen sind mit einer zumindest einen Blasdorn tragenden, verfahrbaren Führungsplatte, mit Spannelementen zur lösbaren Befestigung der Blasdorne an der Führungsplatte und mit einer Höhenverstellung ausgestattet, über welche die Lage der Blasdorne in ihrer Arbeitsstellung festlegbar ist.

Zur Verbesserung der Wirtschaftlichkeit von Blasformmaschinen ist jeder Blasdorn (15) über einen Führungszapfen (15f) in Längsrichtung beweglich an einem an der Führungsplatte (7) befestigten Tragteil (10) gehalten und stützt sich an diesem über ein Gegenlager (18) ab, welches mit dem Tragteil eine Verbindung nach Art einer Verstellschraube bildet. Das Tragteil ist mit am Blasdorn angreifenden, hydraulisch betätigbaren Federspannzylindern (19) ausgestattet, über welche der Blasdorn, das Gegenlager und das Tragteil gegeneinander verspannbar sind.

FIG.3

## Spannvorrichtung für Blasdorne von Blasformmaschinen

Die Erfindung betrifft eine Spannvorrichtung für Blasdorne von Blasformmaschinen, mit einer zumindest einen Blasdorn tragenden Führungsplatte, welche mittels eines Einschießzylinders in Richtung auf die geteilte Blasform und von dieser weg verfahrbar ist, mit Spannelementen, über welche jeder in einer Ebene quer zu seiner Längsachse verschiebbare Blasdorn lösbar an der Führungsplatte gehalten ist, und mit einer Höhenverstellung, über welche die Lage festlegbar ist, die jeder Blasdorn in seiner Arbeitsstellung einnimmt.

Beim Wechsel von Blasformen und/oder von in diese einfahrbaren Blasdornen müssen letztere jeweils bezüglich der Blasformen zentriert und mit Rücksicht darauf, daß sie die in die Blasform abgesenkte Arbeitsstellung mit großer Genauigkeit einnehmen müssen, einer Höhenverstellung unterzogen werden.

Die Zentrierung der Blasdorne wird bei den bekannten Blasformmaschinen dadurch ermöglicht, daß die Blasdorn-Führungsplatte mit zwei rechtwinklig zueinander angeordneten Stellschrauben ausgestattet ist, welche eine Verschiebung und Einstellung des Blasdorns quer zu seiner Längsachse ermöglichen; als Spannelemente dienen mehrere mit dem Blasdorn in Verbindung stehende Klemmschrauben, deren Bewegungsspielraum über in der Führungsplatte angebrachte Langlöcher festgelegt ist. Die Stellschrauben sind drehbar an beiden gegeneinander zu verschiebenden Teilen befestigt, um jeweils in beiden Bewegungsrichtungen wirksam sein zu können. Soweit die Führungsplatte lediglich einen Blasdorn trägt, erfolgt dessen Höhenverstellung durch Bewegen einer geschlitzten Stellmutter, welche den Hub des Einschießzylinders begrenzt; zur Lagesicherung ist die Stellmutter mit einer ihre beiden Hälften miteinander verspannenden Sicherungsschraube ausgestattet.

Bei Führungsplatten mit mehreren Blasdornen müssen die weiteren Blasdorne unabhängig von der Führungsplatte höhenverstellbar ausgebildet sein; zu diesem Zweck sind mit den betreffenden Blasdornen zusammenwirkende geschlitzte Stellmuttern oder Stellspindeln vorgesehen.

Der Nachteil des Standes der Technik bei Ausführungsformen sowohl mit einem Blasdorn als auch mit mehreren Blasdornen ist darin zu sehen, daß die Zentrierung - bedingt durch die Verwendung von Befestigungs-und Stellschrauben - umständlich und zeitaufwendig ist. Insbesondere bei Ausführungsformen mit mehreren Blasdornen entsteht ein unerwünschter Zeitaufwand dadurch, daß jeder Blasdorn einzeln höhenverstellt werden muß, um die gewünschte Arbeitsstellung zu erreichen. Dabei ist zu berücksichtigen, daß die Blasdorne fortlaufend verstellt werden müssen, um ihre Höhenlage an den unterschiedlichen Verschleiß und die sich daraus ergebenden unterschiedlichen Abmessungen ihrer in die Blasform eingreifenden Schneidringe anzupassen; nur auf diese Weise kann sichergestellt werden, daß die Schneidringe den aus der Blasform herausragenden, zu verformenden Schlauch anschneiden, nicht jedoch durchtrennen.

Die beschriebenen Einstell-und Nachstellvorgänge führen unter Umständen dazu, daß die betreffende Blasformmaschine nicht oder nur bedingt wirtschaftlich arbeitet.

Der Erfindung liegt die Aufgabe zugrunde, eine Spannvorrichtung für Blasdorne zu entwickeln, die mit vertretbarem technischem Aufwand ein rasches Wechseln und/oder Nachstellen von Blasdornen - insbesondere auch bei Ausführungsformen mit mehreren Blasdornen - gestattet.

Die Spannvorrichtung soll darüber hinaus so beschaffen sein, daß der Anteil der an ihr von Hand auszuführenden Tätigkeiten gesenkt wird.

Die gestellte Aufgabe wird durch eine Spannvorrichtung mit den Merkmalen des Anspruchs 1 gelöst. Der der Erfindung zugrundeliegende Lösungsgedanke besteht danach darin, den Blasdorn bzw. die Blasdorne über Führungszapfen mit ausreichender Genauigkeit bezüglich des Tragteils - und damit bezüglich der Führungsplatte - zu zentrieren, jedem Blasdorn eine eigene Höhenverstellung in Form eines nach Art einer Verstellschraube wirksamen Gegenlagers zuzuordnen und zur Sicherung der über das Gegenlager eingestellten Höhenlage hydraulisch betätigbare Federspannzylinder einzusetzen, welche jeweils den Blasdorn, das Gegenlager und das Tragteil unbeweglich gegeneinander verspannen. Federspannzylinder in diesem Sinne sind Hydraulikzylinder, deren Kolben unter Einwirkung von Federelementen in der eingefahrenen Spannstellung gehalten werden; bei Druckbeaufschlagung des Kolbens mit Hydraulikflüssigkeit lassen sich die zugehörigen Kolbenstangen in die Öffnungsstellung ausfahren mit der Folge, daß die zwischen dem betreffenden Blasdorn, dem Gegenlager und dem Tragteil wirksame Anpreßkraft entfällt. Zur Einstellung der Höhenlage jedes Blasdorns muß (bei die Spannstellung einnehmenden Federspannzylindern) lediglich das diesen abstützende Gegenlager bewegt werden, wodurch der Blasdorn bezüglich des ihn zentrierenden Tragteils eine Hub-bzw. Absenkbewegung ausführt. Durch die Zentrierung des Blasdorns am Tragteil ist mit ausreichender Genauigkeit gewährleistet, daß sich die Lage der Längsachse des Blasdorns bei der Höhenverstellung nicht unerwünscht ändert.

Falls also bei einer Ausführungsform mit mehreren Blasdornen deren durch die Blasform vorgegebene gegenseitige Zuordnung durch Befestigung an der Führungsplatte einmal festgelegt ist, bedarf es - beispielsweise zur Anpassung an den unterschiedlichen Verschleiß im Bereich der Blasdorn-Schneidringe - nur noch einer Einstellung der jeweiligen Höhenlage.

Der Erfindungsgegenstand ist dadurch weiter ausgestaltet, daß das Gegenlager eine seine Drehung ermöglichende Ausbildung aufweist (Anspruch 2); zu diesem Zweck kann das Gegenlager an seinem Umfang Bohrungen oder Vorsprünge aufweisen, welche seine Mitnahme unmittelbar von Hand oder über einen Steckschlüssel ermöglichen.

Bei einer vorteilhaften Weiterbildung des Erfindungsgegenstandes ist das Gegenlager mit einer Verzahnung ausgestattet, in die ein Verstellmotor über sein verzahntes Antriebsteil eingreift (Anspruch 3). Das Antriebsteil ist vorzugsweise als Ritzel ausge bildet; es kann jedoch auch als Zahnstange ausgebildet sein, die von einem Zylinderaggregat angetrieben ist.

Sofern man die beiden miteinander zu verschraubenden Teile, also die Gegenfläche und das Tragteil, mit Feingewinde ausstattet, bedarf es im Normalfall keiner zusätzlichen Sicherung gegen eine ungewollte Verstellung des Gegenlagers. Unabhängig davon, ob ein Feingewinde zur Anwendung kommt, können der Blasdorn und das Gegenlager jedoch auch über eine Sperre miteinander in Verbindung stehen, welche einer Verschiebung gegeneinander zumindest bei die Spannstellung einnehmenden Federspannzylindern entgegenwirkt (Anspruch 4). Vorzugsweise weist die Sperre zumindest ein bewegliches Sperrelement (beispielsweise eine Kugel oder einen Bolzen) auf, welches federnd in einer von mehreren angepaßten Ausnehmungen in Anlage gehalten ist, wobei das zumindest eine Sperrelement und die auf einem Kreisbogen liegenden Ausnehmungen jeweils nur einem der beiden zusammenwirkenden Teile (d.h. dem Blasdorn oder dem Gegenlager) angehören (Anspruch 5). Falls also beispielsweise das bewegliche Sperrelement federnd im Blasdorn abgestützt ist, sind die Ausnehmungen Bestandteil des Gegenlagers. Bei Verwendung eines (Fein-)Gewindes mit kleiner Steigung und Ausstattung der Sperre mit einer ausreichend großen Anzahl Ausnehmungen läßt sich die Höhenlage des zugehörigen Blasdorns feinfühlig und mit vorbekanntem Hub verändern: Bei einer Gewindesteigung von 1 mm und 20 Ausnehmungen beträgt die kleinstmögliche Änderung der Höhenlage des zugehörigen Blasdorns 0,05 mm.

Bei einer bevorzugten Ausführungsform des Erfin dungsgegenstandes besteht das Gegenlager aus einer Gewindebüchse (Anspruch 6); diese ist auf ihrer vom Blasdorn abgewandten Seite mit einem Gewindeabschnitt ausgestattet, welcher mit dem Tragteil des betreffenden Blasdorns verschraubt ist.

Vorzugsweise ist der Erfindungsgegenstand in der Weise weiter ausgestaltet, daß die Kolbenstangen der Federspannzylinder auf der vom Tragteil abgewandten Seite über Stützplatten am Blasdorn angreifen, wobei die Durchtrittsöffnungen für die Kolbenstangen in der Draufsicht kreisbogenförmig ausgebildet und mit Einfädelöffnungen für die Kolbenstangen ausgestattet sind (Anspruch 7). Der Blasdorn kann also in einfacher Weise dadurch mit dem Tragteil verbunden werden, daß sein Führungszapfen in dieses eingeführt wird und durch Drehen des Blasdorns um seine Längsachse die Kolbenstangen der Federspannzylinder oberhalb ihrer Stützplatten in die Durchtrittsöffnungen eingefädelt werden. Dies setzt selbstverständlich voraus, daß das Gegenlager bereits mit dem Tragteil verschraubt ist und die Federspannzylinder nach Druckbeaufschlagung die Öffnungsstellung einnehmen.

Falls das Gegenlager motorisch angetrieben ist, kann der Wechsel des Blasdorns einschließlich seiner Höhenverstellung ohne weiteres mittels eines Manipulators ferngesteuert ausgeführt werden, da auch die Federspannzylinder, welche die Lage des Blasdorns bezüglich des Tragteils und der Führungsplatte festlegen, aus der Ferne betätigbar sind.

Die Handhabung und Einstellung der Blasdorne läßt sich dadurch weiter vereinfachen, daß die Führungsplatte mit Hydraulik-Haltezylindern ausgestattet ist, an deren in die Öffnungsstellung ausgefahrenen Kolbenstangen sich das Tragteil über Stützplatten verschiebbar abstützt (Anspruch 8). Der Erfindungsgegenstand kann dabei unter dem Gesichtspunkt der Automatisierung und Fernbetätigung in der Weise ausgebildet sein, daß die Verbindung zwischen der Führungsplatte und dem Tragteil ausschließlich aus fernbedienbaren Hydraulik-Haltezylindern besteht. Im Rahmen der Erfindung können diese unterschiedlich ausgebildet sein und eine unterschiedliche Funktion aufweisen: Ein Teil der Hydraulik-Haltezylinder kann dazu dienen, das Tragteil zunächst leicht beweglich an der Führungsplatte in Anlage zu halten und anschließend in einer gewünschten Lage festzuklemmen, bevor die eigentliche Verspannung durch Betätigen weiterer Hydraulik-Haltezylinder herbeigeführt wird. Bei dieser Ausführungsform mit unterschiedlichen Hydraulik-Haltezylindern können beispielsweise zwei kleiner und zwei größer dimensionierte Haltezylinder zur Anwendung kommen, die sich bezüglich der Mittelachse der Führungsplatte jeweils diagonal gegenüberliegen.

Es besteht jedoch auch die Möglichkeit, als Spannelemente zusätzlich zu den Hydraulik-Haltezylindern nach Anspruch 8 Spannschrauben an der Führungsplatte anzubringen, die auf der von dieser abgewandten Seite des Tragteils beweglich gehaltene Stützplatten tragen (Anspruch 9). Die Spannschrauben dienen dabei dazu, zunächst die Ausrichtung und vorläufige Feststellung des Tragteils bezüglich der Führungsplatte zu ermöglichen, bevor die Hydraulik-Haltezylinder die beiden genannten Teile unbeweglich miteinander verspannen.

Die Hydraulik-Haltezylinder können dabei in der Weise ausgebildet sein, daß ihre Kolbenstangen in beiden Richtungen hydraulisch verfahrbar sind; es können jedoch auch Haltezylinder in Form der bereits beschriebenen Federspannzylinder zur Anwendung kommen.

Die Erfindung wird nachfolgend anhand der Zeichnung im einzelnen erläutert.

Es zeigen:

Fig.1 einen vertikalen Teilschnitt durch eine Spannvorrichtung mit einem Blasdorn im Bereich der Blasdorn-Führungsplatte,

Fig. 2 einen Schnitt nach Linie II-II in Fig. 1, wobei die an der Führungsplatte befestigten Hydraulik-Haltezylinder nicht geschnitten sind,

Fig. 3 in gegenüber Fig. 1 vergrößertem Maßstab einen vertikalen Teilschnitt durch das an der Führungsplatte befestigte Tragteil, den daran gehaltenen Blasdorn und die zugehörige geteilte Blasform,

Fig. 4 eine Draufsicht auf eine von Hand betätigbare Blasdorn-Höhenverstellung,

Fig. 5 eine Draufsicht auf eine Blasdorn-Höhenverstellung, die mittels eines Verstellmotors fernbetätigbar ist,und

Fig. 6 eine Draufsicht auf ein Tragteil, mit dem drei Blasdorne verschraubt sind.

Die beispielsweise mit einem Blasdorn ausgestattete Blasformmaschine, deren Bestandteil die erfindungsgemäße Spannvorrichtung ist, arbeitet folgendermaßen:

Zur Durchführung des Blasvorgangs wird der Blasdorn mittels eines hydraulisch betätigbaren Einschießzylinders in Richtung auf eine geteilte Blasform abgesenkt, deren die Blasstellung einnehmende, miteinander verspannte Blasformhälften oben und unten einen aufzuweitenden Schlauchabschnitt feshalten. Der mit der Blasform fluchtende Blasdorn wird mittels des Einschießzylinders so weit in Richtung auf diese verfahren, daß seine Blasöffnung innerhalb des Schlauchabschnitts in den Formhohlraum hineinragt und sein oberhalb der Blasöffnung befindlicher Schneidring den Schlauchabschnitt oberhalb des Formhohlraums lediglich anschneidet. Nach Beendigung des Blasvorgangs wird der Blasdorn wieder hochgefahren, bevor das aus der Blasform herausragende, angeschnittene Schlauchende (der sog. Butzen) nach dem Öffnen der Blasform abgeschlagen und das Blaserzeugnis aus deren Bereich wegbefördert wird.

Für den einwandfreien Betrieb der Blasformmaschine ist es von wesentlicher Bedeutung, daß jeder Blasdorn bezüglich des zugehörigen Formhohlraums zentriert ist und mit ausreichender Genauigkeit eine bestimmte Höhenlage einnimmt; diese muß insbesondere auch trotz des am Blasdorn (d.h. am Schneidring) auftretenden Verschleißes eingehalten werden.

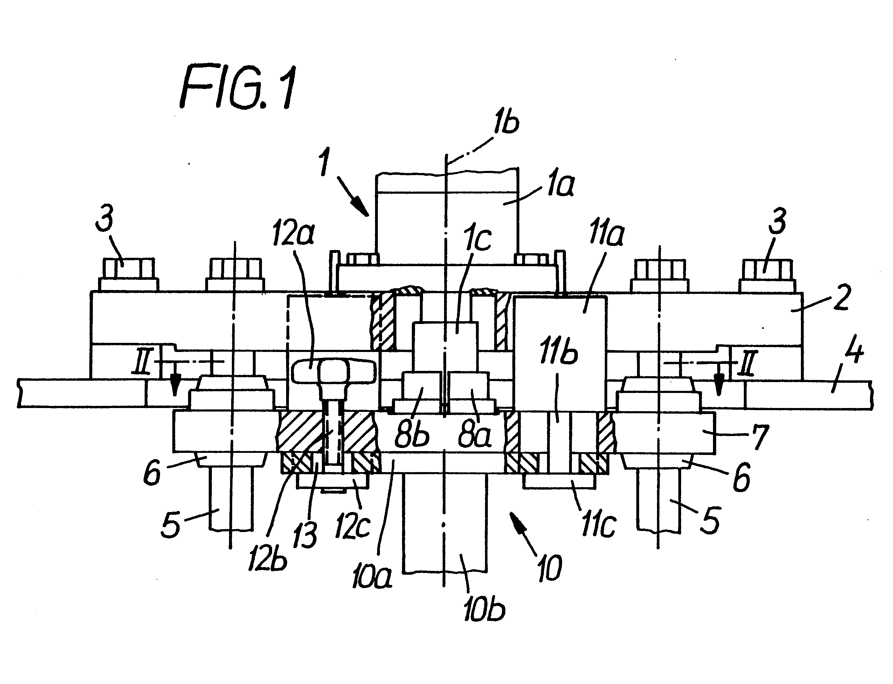

Das Gehäuse 1a mit der lotrechten Längsachse 1b des Einschießzylinders 1 ist an seiner Unterseite mit einer Querplatte 2 verschraubt, die ihrerseits über Sechskantschrauben 3 mit einem ortsfesten Rahmen 4 des nicht weiter dargestellten Gestells der Blasformmaschine in Verbindung steht (Fig. 1).

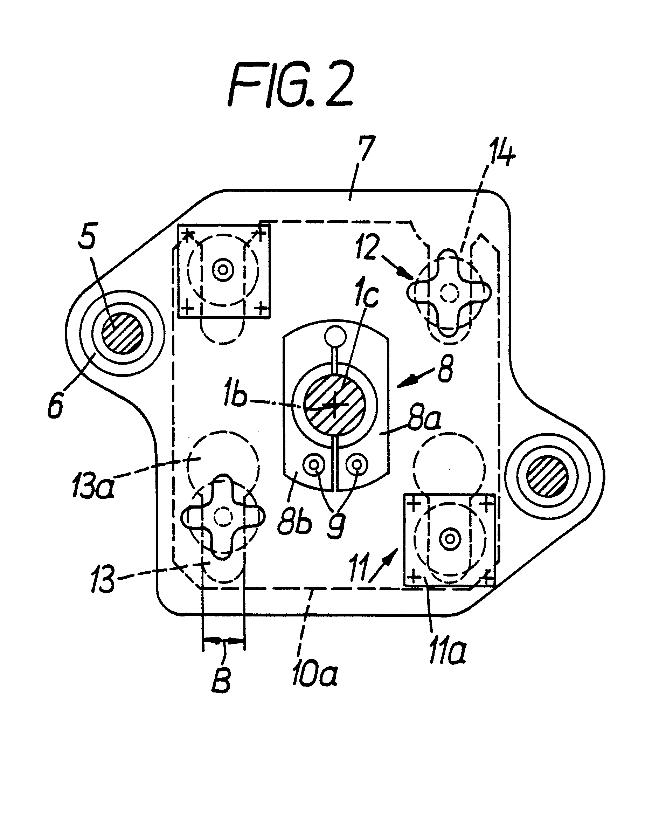

Mit der Querplatte 2 sind weiterhin - sich bezüglich der Längsachse 1b diagonal gegenüberliegend (vgl. dazu Fig. 2) - zwei Führungsstangen 5 verschraubt, an denen über Führungsbuchsen 6 eine Blasdorn-Führungsplatte 7 in lotrechter Richtung beweglich gehalten ist. Das Kupplungselement, über welches die Kolbenstange 1c des Einschießzylinders 1 in geringem Umfang nachgiebig mit der Führungsplatte 7 verbunden ist, besteht aus einer geteilten Klemmbuchse 8 mit Klemmbacken 8a und 8b, welche über Innensechskantschrauben 9 lösbar an der Führungsplatte befestigt ist; diese kann also durch Aus-bzw. Einfahren der Kolbenstange 1c entlang der Führungsstangen 5 in lotrechter Richtung abgesenkt bzw. hochgefahren werden.

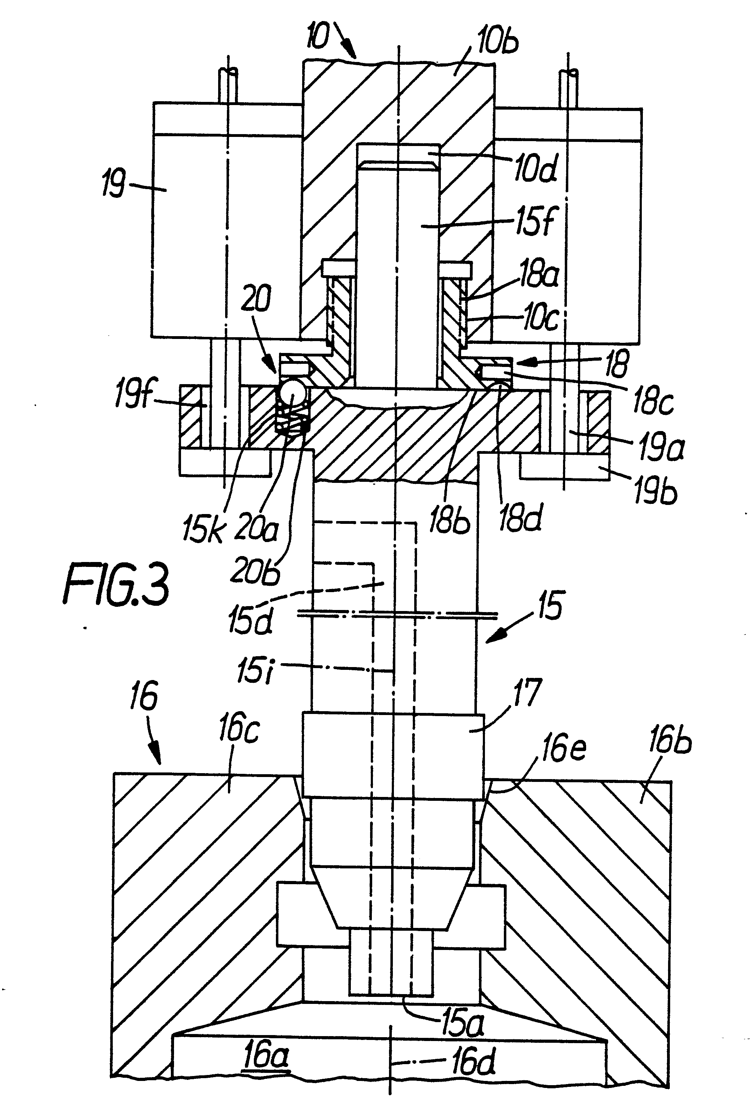

Mit der Führungsplatte 7 kann bei der beispielhaft dargestellten Ausführungsform mit lediglich einem Blasdorn über ein Tragteil 10 ein Blasdorn (vgl. dazu Fig. 3) verspannt werden; das Tragteil besteht dabei aus einer Tragplatte 10a, mit der ein Längsträger (über nicht dargestellte Innensechskantschrauben) verschraubt ist.

Die bewegliche Führungsplatte 7 (vgl. dazu auch Fig. 2) ist mit zwei Hydraulik-Haltezylindern 11 und zwei mit Handgriffen 12a ausgestatteten Klemmschrauben 12 ausgestattet, die sich bezüglicher Längsachse 1b jeweils paarweise diagonal gegenüber liegen und die sich über ihr Gehäuse 11a bzw. über ihr Gewinde 12b an der Führungsplatte 7 abstützt. Die Kolbenstangen 11b der Hydraulik-Haltezylinder sind ebenso wie die Klemmschrauben 12 mit scheibenförmigen Stützplatten 11c bzw. 12c ausgestattet; die Stützplatten 12c sind zweckmäßigerweise drehbar an den Klemmschrauben gehalten.

Die Tragplatte 10a ist in Anpassung an die Teile 11 und 12 derart mit länglichen Durchtrittsöffnungen 13 bzw. 14 ausgestattet, daß sie ohne Abbau der Stützplatten 11c und 12c an diesen vorbeibewegt werden kann.

Die (in Fig. 2 obenliegenden) Durchtrittsöffnungen 14 sind zu diesem Zweck seitlich offen, während die (untenliegenden) Durchtrittsöffnungen 13 seitlich geschlossen sind und daher eine den Stützplatten angepaßte Erweiterung 13a aufweisen. Die Breite B der Durchtrittsöffnungen 13, 14 ist im übrigen größer als der Durchmesser der Kolbenstangen 11b bzw. Klemmschrauben 12.

Um das Tragteil 10 und den Blasdorn in einer Ebene quer zu seiner Längsachse (vgl. dazu Fig. 3) ausrichten zu können, werden die Hydraulik-Haltezylinder 11 in ihre Öffnungsstellung verfahren und die Klemmschrauben 12 von Hand nach unten geschraubt, bevor das Tragteil 10 nebst Blasdorn über die Tragplatte 10a an den Stützplatten 11c, 12c vorbei eingefädelt und durch eine anschließende Verschiebung senkrecht zur Zeichenebene an den Stützplatten 12c zur Anlage gebracht wird. Zweckmäßigerweise werden danach die Klemmschrauben 12 so weit angezogen, daß die Tragplatte 10a mit geringem Spiel beweglich zwischen den Teilen 7 und 12c gehalten ist. Durch Ausfahren des Einschießzylinders 1 in Richtung auf die Blasform kann nunmehr die Lage ermittelt werden, welche der Blasdorn - und damit das ihn tragende Tragteil 10 - in der Arbeitsstellung einnehmen muß. Sobald die Tragplatte 10a die gewünschte Lage erreicht hat, in welcher die Blasdorn-Längsachse mit der Längsachse der Blasform fluchtet, wird das Tragteil 10 durch weiteres Anziehen der Klemmschrauben 12 vorläufig fixiert; im Anschluß daran werden die Teile 10 und 7 durch Einfahren der Kolbenstangen 11b in die Spannstellung unbeweglich miteinander verspannt.

Die Hydraulik-Haltezylinder 11 können in der Weise ausgebildet sein, daß ihre Kolbenstangen durch unterschiedliche Druckbeaufschlagung in beiden Richtungen verfahrbar sind. Bei einer besonders einfachen und betriebssicheren Ausführungsform bestehen die Hydraulik-Haltezylinder 11 aus Federspannzylindern: Diese sind mit Federelementen ausgestattet, welche die zugehörigen Kolbenstangen ohne Druckbeaufschlagung in der Spannstellung halten; erst bei ausreichender Druckbeaufschlagung fahren die Kolbenstangen - entgegen der Wirkung der Federelemente - in die Öffnungsstellung aus.

Abweichend von der oben beschriebenen Ausgestaltung kann die Führungsplatte 7 unter Verzicht auf handbetätigte Klemmschrauben 12 auch ausschließlich mit Hydraulik-Haltezylindern ausgestattet sein. Insbesondere ist es möglich, die beiden Klemmschrauben durch kleiner dimensionierte Hydraulik-Haltezylinder zu ersetzen; in Anpassung an die Funktion der Spannschrauben 12 sollte deren Kolbenhub so bemessen sein, daß er nur geringfügig größer ist als die Stärke der Tragplatte 10a.

Der Vorteil dieser abgewandelten Ausführungsform ist darin zu sehen, daß sämtliche Betätigungsvorgänge im Bereich der Blasdorn-Führungsplatte ohne Eingriffe von Hand und erforderlichenfalls ferngesteuert ausgeführt werden können.

An dem Längsträger 10b des Tragteils 10 ist lösbar ein Blasdorn 15 befestigt (vgl. Fig. 3), dessen nach unten gerichtete Blasöffnung 15a in der abgesenkten Arbeitsstellung in den Formhohlraum 16a einer Blasform 16 hineinragt; diese besteht aus zwei zusammenwirkenden Blasformhälften 16b und 16c, die in der Blasstellung miteinander verspannt sind. Die Höhenlage des Blasdorns 15, dem Druckluft über die schematisch angedeutete Blasdornbohrung 16d zugeführt wird, muß mit hoher Genauigkeit einstellbar sein, damit der auswechselbar am Blasdorn gehaltene Schneidring 17 bezüglich der benachbarten Blasformwandung 16e jeweils einen bestimmten Abstand aufweist; dieser liegt beispielsweise in der Größenordnung von 0,1 mm.

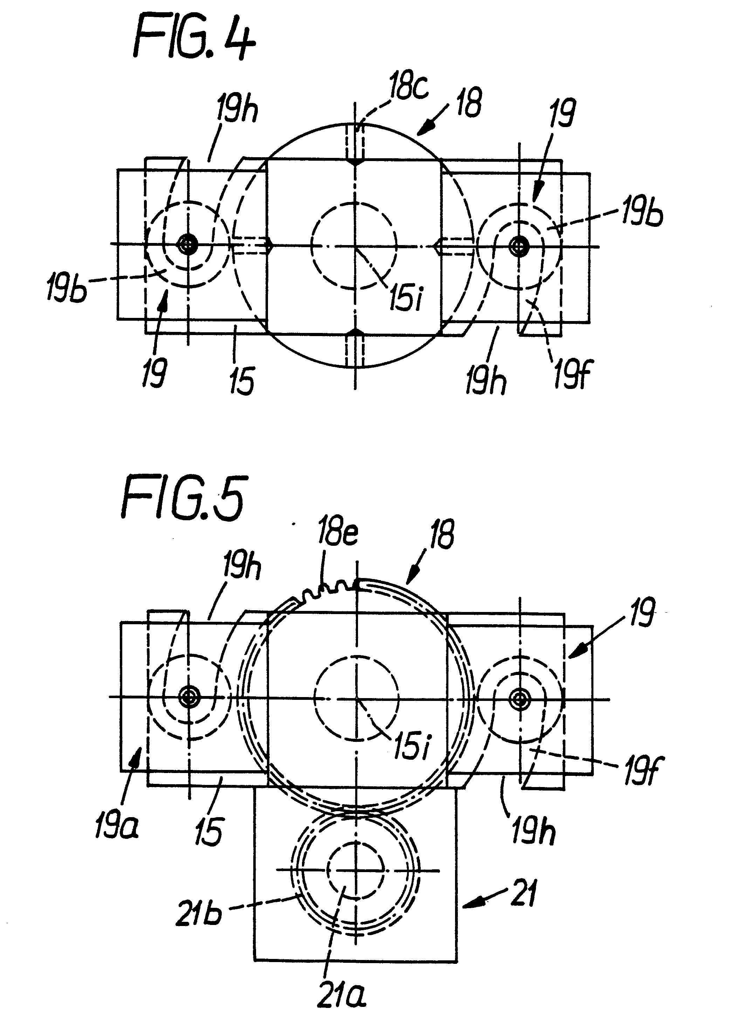

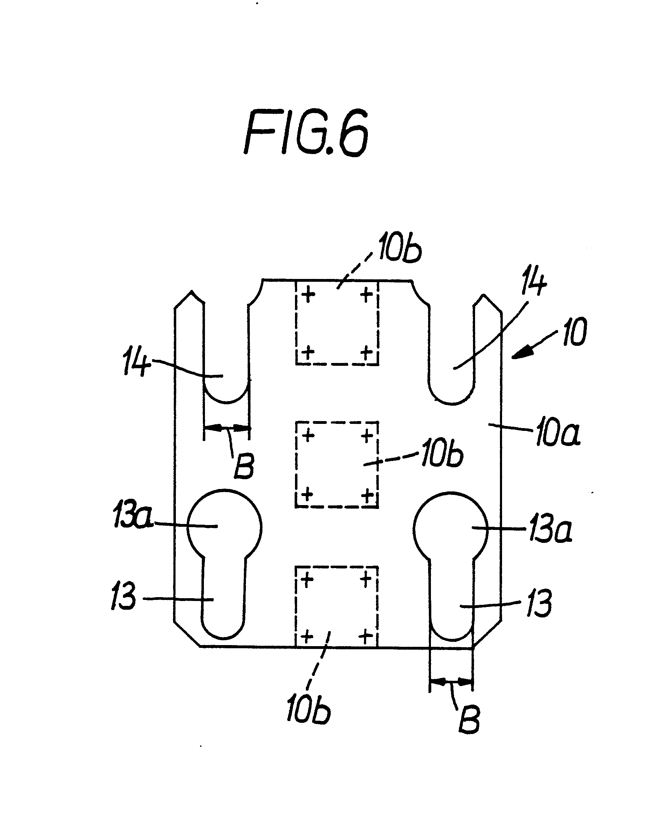

Die Höhenverstellung des Blasdorns 15 besteht im wesentlichen aus einem Gegenlager 18 in Form einer Gewindebüchse, die sich über einen Gewindeabschnitt 18a mit Feingewinde in einer angepaßten Gewindebohrung 10c des Längsträgers 10b abstützt, also mit diesem eine Verbindung nach Art einer Verstellschraube bildet. Der Blasdorn greift über einen Führungszapfen 15f in Längsrichtung beweglich mit geringem Spiel in eine Führungsbohrung 10d im Längsträger ein und stützt sich in Richtung auf diesen zusätzlich an dem Gegenlager 18 ab. Durch dessen Drehung kann die Lage des Blasdorn bezüglich des Tragteils 10 im Sinne einer Annäherung oder Abstandsvergrößerung feinfühlig verändert werden. Die Befestigung des Blasdorns erfolgt über zwei hydraulisch betätigbare Federspannzylinder 19, die am Längsträger 10b befestigt sind und deren Kolbenstangen 19a über Stützplatten 19b auf der vom Tragteil 10 abgewandten Seite am Blasdorn 15 angreifen. Dieser weist im Bereich der Kolbenstangen 19a in der Draufsicht kreisbogenförmig ausgebildete Durchtrittsöffnungen 19g auf, die seitlich mit Einfädelöffnungen 19h ausgestattet sind (vgl. dazu Fig. 4 und Fig. 5). Falls die Federspannzylinder 19 druckbeaufschlagt sind und dementsprechend ihre Öffnungsstellung einnehmen, kann der Blasdorn 15 durch Drehen im Gegenuhrzeigersinn von den Stützplatten 19b der Federspannzylinder 19 freigesetzt und dadurch vom Tragteil 10 abgezogen werden.

Bei Abschalten des Hydraulikdrucks wird über in den Federspannzylindern 19 angeordnete Federelemente mittels der scheibenförmigen Stützplatten 19b eine nach oben gerichtete Spannkraft ausgeübt, welche den Blasdorn 15 über die Auflagefläche 18b des Gegenlagers 18 und den Gewindeabschnitt 18a unbeweglich mit dem Längsträger 10b verspannt. Der Führungsbolzen 15f ist mit ausreichendem Bewegungsspielraum durch das Gegenlager 18 hindurchgeführt; auf diese Weise ist sichergestellt, daß eine einmal eingestellte Lage der Blasdorn-Längsachse 15i bezüglich der Blasform-Längsachse 16d auch dann mit großer Genauigkeit erhalten bleibt, wenn die Höhenlage des Blasdorns durch Drehen des Gegenlagers 18 verändert wird; dieses ist zur Verstellung von Hand an seinem nach außen gerichteten Umfang mit vier Mitnahmebohrungen 18c ausgestattet, in die beispielsweise ein Steckschlüssel eingeführt werden kann (vgl. dazu auch Fig. 4).

Die von den Federspannzylindern 19 ausgeübte Spannkraft ist im Normalfall ausreichend, um eine ungewollte Drehung des Gegenlagers 18 und damit eine ungewollte Veränderung der Höhenlage des Blasdorns 15 zu verhindern.

Die Betriebssicherheit in dieser Hinsicht läßt sich jedoch dadurch verbessern, daß die Spannvorrichtung zusätzlich mit einer Sperre 20 ausgestattet wird. Diese besteht in dem dargestellten Ausführungsbeispiel (Fig. 3) aus einer Sperrkugel 20a mit einem Federelement 20b, die in einer Bohrung 15k an der Oberseite des Blasdorns 15 gehalten sind; die Sperrkugel 20a stützt sich unter der Einwirkung des Federelements 20b nachgiebig in einer von mehreren Ausnehmungen 18d ab, die kreisbogenförmig an der Auflagefläche 18b des Gegenlagers 18 abgebracht sind. Durch die federnde Abstützung der Sperrkugel 20a sowohl am Gegenlager 18 als auch am Blasdorn 15 wird eine ungewollte Verdrehung dieser beiden Teile gegeneinander ausgeschlossen, solange sie unter Einwirkung der Federspannzylinder 19 aneinander anliegen.

Erforderlichenfalls kann die Sperre 20 auch mehrere gleichzeitig wirksame Sperrelemente in Form federnd gehaltener Sperrkugeln 20a aufweisen.

Die Höhenverstellung 20 kann - im Sinne einer möglichst weitgehenden Automatisierung der Betätigung der Spannvorrichtung - auch fernsteuerbar ausgebildet sein. Zu diesem Zweck ist bei der Ausführungsform nach Fig. 5 das Gegenlager 18 mit einer Verzahnung 18e ausgestattet, in die ein Verstellmotor 21, beispielsweise ein Hydraulikmotor, über ein an seiner Antriebswelle 21a befestigtes Ritzel 21b eingreift; der Verstellmotor selbst ist unbeweglich am Längsträger 10b des Tragteils 10 (vgl. Fig. 1 und 3) gehalten. Durch die Inbetriebnahme des Verstellmotors 21 kann das Gegenlager 18 bei die Spannstellung einnehmenden Spannzylindern 19 in der gewünschten Weise gedreht und dabei ein-bzw. ausgefahren werden. Vorzugsweise ist der Verstellmotor mit einer Bremse ausgestattet, die beim Abschalten selbsttätig wirksam wird; bei dieser Ausführungsform kann daher auf die Ausstattung der Spannvorrichtung mit der vorher beschriebenen Sperre verzichtet werden.

Der Erfindungsgegenstand kann auch an Blasformmaschinen zur Anwendung kommen, die mit Mehrfach-Blasformen ausgestattet sind und dementsprechend mehrere Blasdorne aufweisen. Bei einer derartigen Ausführungsform sind mit der Tragplatte 10a des Tragteils 10 mehrere Längsträger 10b verschraubt (vgl. Fig. 6).

Die lediglich einmal vorzunehmende Ausrichtung der Längsträger 10b bezüglich der Mehrfach-Blasform führt dabei normalerweise nicht zu Schwierigkeiten, da sich die Blasformen hinsichtlich der Ausbildung und Lage ihrer Formhohlräume mit ausreichender Genauigkeit herstellen lassen. Nach der Befestigung der Längsträger 10b an der Tragplatte 10a können die Blasdorne in der bereits beschriebenen Weise einzeln in die für den Blasvorgang erforderliche Höhenlage gebracht werden; eine unerwünschte Lage änderung der Blasdorne während der Höhenverstellung wird dabei dadurch ausgeschlossen, daß- jeder Blasdorn durch einen eigenen Führungsbolzen in Längsrichtung beweglich im Tragteil 10 zentriert ist.

Der mit der Erfindung erzielte Vorteil besteht insbesondere darin, daß der Zeitaufwand, der mit dem Wechsel von Blasdornen und/oder Blasformen bzw. mit erforderlichen Anpassungsvorgängen im Bereich der Blasdorne verbunden ist, beträchtlich gesenkt werden kann; abhängig von der Ausgestaltung der zum Einsatz kommenden Spannelemente und der Höhenverstellung kann die Betätigung der erfindungsgemäßen Spannvorrichtung ferngesteuert und ggf. auch automatisch erfolgen.

Bei der Ausgestaltung der Höhenverstellung wird eine vorteilhafte Eigenschaft der Federspannzylinder ausgenutzt; diese besteht darin, daß die von den Federspannzylindern ausgehende Spannwirkung auch dann erhalten bleibt, wenn die Lage des Blasdorns bezüglich seines Tragteils verändert wird.

Die Ausgestaltung der Höhenverstellung ist insofern vorteilhaft, als allenfalls ein Einstellvorgang - nämlich die Drehung des Gegenlagers - von Hand ausgeführt werden muß; irgendwelcher zusätzlicher Maßnahmen von Hand zur Befestigung bzw. zum Freisetzen des Gegenlagers bedarf es nicht.

Die Zentrierung des Blasdorns bzw. der vorhandenen Blasdorne bezüglich der Blasform erfolgt bei verschiebbar gehaltenem Tragteil; angesichts dieser Beweglichkeit können die Blasdorne ohne Betätigung irgendwelcher Stellschrauben beim Absenken in Rich tung auf die Blasform in diese eingefädelt und anschließend durch Festhalten des Tragteils in der gewünschten Lage arretiert werden. Die Ausstattung des Tragteils und der Blasdorne mit geeigneten Durchtrittsöffnungen erleichtert den Wechsel der Tragteile einschließlich der zugehörigen Blasdorne bzw. den Wechsel oder Ausbau einzelner Blasdorne.

## Ansprüche

1. Spannvorrichtung für Blasdorne von Blasformmaschinen, mit einer zumindest einen Blasdorn tragenden Führungsplatte, welche mittels eines Einschießzylinders in Richtung auf die geteilte Blasform und von dieser weg verfahrbar ist, mit Spannelementen, über welche jeder in einer Ebene quer zu seiner Längsachse verschiebbare Blasdorn lösbar an der Führungsplatte gehalten ist, und mit einer Höhenverstellung, über welche die Lage festlegbar ist, die jeder Blasdorn in seiner Arbeitsstellung einnimmt, **dadurch gekennzeichnet**, daß jeder Blasdorn (15) über einen Führungszapfen (15f) in Längsrichtung beweglich an einem an der Führungsplatte (7) befestigten Tragteil (10) gehalten ist und sich an diesem über ein Gegenlager (18) abstützt, welches mit dem Tragteil eine Verbindung nach Art einer Verstellschraube bildet, und daß das Tragteil (10) am Blasdorn (15) angreifende, hydraulisch betätigbare Federspannzylinder (19) trägt, über welche der Blasdorn, das Gegenlager und das Tragteil gegeneinander verspannbar sind.

2. Vorrichtung nach Anspruch 1, dadurch gekennzeichnet, daß das Gegenlager (18) eine seine Drehung ermöglichende Ausbildung aufweist.

3. Vorrichtung nach Anspruch 1 oder 2, dadurch gekennzeichnet, daß das Gegenlager (18) mit einer Verzahnung (18e) ausgestattet ist, in die ein Verstellmotor (21) über sein verzahntes Antriebsteil (21b) eingreift.

4. Vorrichtung nach einem der Ansprüche 1 bis 3, dadurch gekennzeichnet, daß der Blasdorn (15) und das Gegenlager (18) über eine Sperre (20) miteinander in Verbindung stehen, welche einer Verschiebung der beiden erstgenannten Teile (15, 18) gegeneinander zumindest bei die Spannstellung einnehmenden Federspannzylindern (19) entgegenwirkt.

5. Vorrichtung nach Anspruch 4, dadurch gekennzeichnet, daß die Sperre (20) zumindest ein bewegliches Sperrelement (20a) aufweist, welches federnd in einer von mehreren angepaßten Ausnehmungen (18d) in Anlage gehalten ist, wobei das zumindest eine Sperrelement und die auf einem Kreisbogen liegenden Ausnehmungen nur einem der beiden zusammenwirkenden Teile (Blasdorn, Gegenlager) angehören.

6. Vorrichtung nach einem der Ansprüche 1 bis 5, dadurch gekennzeichnet, daß das Gegenlager (18) als Gewindebüchse ausgebildet ist.

7. Vorrichtung nach einem der Ansprüche 1 bis 6, dadurch gekennzeichnet, daß die Kolbenstangen (19a) der Federspannzylinder (19) auf der vom Tragteil (10) abgewandten Seite über Stützplatten (19b) am Blasdorn (15) angreifen, wobei die Durchtrittsöffnungen (19f) für die Kolbenstangen in der Draufsicht kreisbogenförmig ausgebildet und mit Einfädelöffnungen (19h) für die Kolbenstangen ausgestattet sind.

8. Vorrichtung nach einem der Ansprüche 1 bis 7, dadurch gekennzeichnet, daß die Führungsplatte (7) mit Hydraulik-Haltezylindern (11) ausgestattet ist, an deren in die Öffnungsstellung ausgefahrenen Kolbenstangen (11b) sich das Tragteil (10) über Stützplatten (11c) verschiebbar abstützt.

9. Vorrichtung nach Anspruch 8, dadurch gekennzeichnet, daß als Spannelemente zusätzlich Spannschrauben (12) an der Führungsplatte (7) angebracht sind, die auf der von dieser abgewandten Seite des Tragteils (10) beweglich gehaltene Stützplatten (12c) tragen.

FIG.1

0 265 713

# FIG. 2

FIG.3

FIG.4

FIG.5

# FIG.6